# EUROPÄISCHE PATENTSCHRIFT

(11) **EP 3 973 252 B1**
(45) Veröffentlichungstag und Bekanntmachung des Hinweises auf die Patenterteilung: **23.08.2023**
(21) Anmeldenummer: 20746905.7
(22) Anmeldetag: 16.07.2020
(51) Int. Cl.: G01D 3/10, H01H 19/56, H01H 15/18, G01D 3/024, G01D 5/165

(54) **SIGNALISIERUNGSVORRICHTUNG**
MEASURING DEVICE
DISPOSITIF DE MESURE

(30) Priorität: 31.07.2019 EP 19189377
(43) Veröffentlichungstag der Anmeldung: 30.03.2022
(73) Patentinhaber: Siemens Aktiengesellschaft, 80333 München (DE)
(72) Erfinder: STUDNICKA, Michal, 54101 Trutnov (CZ); SAFRANEK, Petr, 54701 Náchod (CZ)
(74) Vertreter: Siemens Patent Attorneys
(86) Internationale Anmeldenummer: PCT/EP2020/070158
(87) Internationale Veröffentlichungsnummer: WO 2021/018618

(56) Entgegenhaltungen:
- CH-A- 253 812
- DE-A1- 2 103 109
- DE-A1- 2 458 319
- DE-B- 1 226 205

## Beschreibung

Die Erfindung betrifft eine Signalisierungsvorrichtung, welche dazu eingerichtet ist, ein Auswahlsignal mittels einer analogen Auswahlvorrichtung zur Wahl eines Signalbereichs zu erzeugen, und eine Bereichsskala zur Anzeige des durch die analoge Auswahlvorrichtung gewählten Signalbereichs.

Signalisierungsvorrichtungen im industriellen Umfeld sollen häufig besondere Anforderungen an den Einbau in Anlagen erfüllen, wie beispielsweise ein bevorzugter Formfaktor, eine spezielle Montageart oder eine besondere Bedienung eines Sensors.

Beispielsweise kann es vorsehen sein, dass eine Signalisierungsvorrichtung in Form einer Messvorrichtung in ein Gehäuse für eine Montage in einem Installationsschrank mittels einer Hut- oder Tragschienenbefestigung (wie nach DIN EN 60715:2001-0 oder TH 35 gemäß DIN EN 50022) integriert werden soll, wobei das Gehäuse möglichst schmal ausgeführt werden soll. Dies kann dazu führen, dass nur sehr wenig Platz für Bedien- oder Einstellelemente der Messvorrichtung auf der Vorderseite des Hutschienengehäuses zur Verfügung steht und die Bedien- oder Einstellelemente sehr klein ausgeführt werden müssen. Ferner kann es erwünscht sein, dass die Bedienung der Bedien- oder Einstellelemente mittels einem Schraubenzieher erfolgen soll, wie es bei der Elektroinstallation häufig vorgesehen ist. Ein solches Bedienelement, beispielsweise für eine Messbereichseinstellung, kann dabei zu einer falschen Konfiguration der Messvorrichtung oder zu einer Fehlinterpretation von Messwerten führen, was auf mechanische Toleranzen zwischen dem analogen Einstellelement und einer zugeordneten Messbereichsanzeige und/oder Skala zurückgeführt werden kann.

Dadurch kann die Verlässlichkeit von Messwerten, die durch eine derartige Messvorrichtung erfasst werden, ungünstig beeinträchtigt werden. Die DE2458319A1 offenbart ein Messgerät mit einem Messbereichsumschalter.

Es ist die Aufgabe der Erfindung die Signalisierungsvorrichtung eingangs genannter Art dahingehend zu verbessern, dass die Verlässlichkeit von Einstellwerten verbessert wird, insbesondere bei an einer Skala aneinander liegenden Einstellbereichen.

Die Aufgabe wird durch die Signalisierungsvorrichtung eingangs genannter Art gelöst, indem die Bereichsskala zumindest zwei Einstellbereiche und zumindest einen Übergangsbereich aufweist, wobei jeweils ein Einstellbereich von den zumindest zwei Einstellbereichen alternierend mit jeweils einem Übergangsbereich von dem zumindest einen Übergangsbereich längs einer Erstreckung der Bereichsskala angeordnet sind, und die analoge Auswahlvorrichtung so angeordnet ist, dass eine Auswahl eines Einstellbereichs oder eines Übergangsbereichs längs der Erstreckung der Bereichsskala erfolgt und die analoge Auswahlvorrichtung dabei einen analogen Auswahlwert festlegt, und die Signalisierungsvorrichtung ferner dazu eingerichtet ist, den analogen Auswahlwert mithilfe des Auswahlsignals zu erfassen und zu prüfen, ob dieser einem Wert entspricht, welcher einem Übergangsbereich zugeordnet ist, und falls zutreffend, ein Signal durch ein, von der Signalisierungsvorrichtung umfasstes Signalisierungsmittel auszugeben.

Dadurch wird erreicht, dass die Vorrichtung bei Übergang zwischen zwei benachbarten Einstellbereichen ein Signal ausgibt, welches einem Benutzer angibt, dass ein Übergangsbereich gewählt ist, bei dem es auf der Skala nicht eindeutig erkennbar ist, welcher der beiden benachbarten Einstellbereich tatsächlich ausgewählt ist und sich die analoge Auswahlvorrichtung daher in einem Übergangsbereich der Skala befindet. Der analoge Auswahlwert ist dabei aber trotzdem immer eindeutig und von der Skala unabhängig. Dadurch wird sichergestellt, dass eine weitere Betätigung der analogen Auswahlvorrichtung durch den Benutzer benötigt wird, um eine korrekte Auswahl des gewünschten Einstellbereichs zu erhalten und dadurch beispielsweise die Verlässlichkeit von ermittelten Messwerten durch eine eindeutige, korrekte Messbereichsauswahl verbessert wird.

Die erfindungsgemäße Vorrichtung kann beispielsweise als Messvorrichtung oder zur Einstellung von Stellgrößen angewandt werden, welche an einer Skala nebeneinander angeordnet sind und durch Übergangsbereiche voneinander getrennt sind.

Es kann auch vorgesehen sein, dass die Bereichsskala eine sichtbare erste Skala und eine logische, nicht sichtbare zweite Skala umfasst.

Die sichtbare Skala ist beispielsweise auf das Messgerät aufgedruckt, während die logische Skala durch die Logik konfiguriert beziehungsweise programmiert ist.

Die sichtbare Skala kann der logischen Skala entsprechen, oder auch von der logischen Skala abweichen.

Beispielsweise kann die sichtbare Skala auf explizit erkennbare Übergangsbereiche verzichten oder diese nur sehr schmal zeigen, obwohl die logische Skala andere beziehungsweise breitere Übergangsbereiche vorsieht. Die Abweichung zwischen der logischen Skala und sichtbaren Übergangsbereichen der aufgedruckten Skala kann sinnvoll sein, um die mechanischen Toleranzen der Skala und der analogen Auswahlvorrichtung entsprechend zu berücksichtigen.

Die Einstellbereiche der sichtbaren Skala und die Einstellbereiche der logischen Skala korrespondieren zueinander und überlappen sich dabei zumindest. Mit anderen Worten kann ein jeweiliger Einstellbereich der sichtbaren Skala größer sein als der korrespondierende Einstellbereich der logischen Skala, da ein Übergangsbereich der logischen Skala einen Teil des jeweiligen Einstellbereichs der sichtbaren Skala einnimmt.

Die Übergangsbereiche der logischen Skala können mit Einstellbereichen der sichtbaren Skala überlappen.

Der Übergangsbereich der logischen Skala kann durch die Logik konfiguriert beziehungsweise programmiert werden.

Durch das Signalisierungsmittel wird ein Verlassen eines gewählten Bereichs, beispielsweise eines Messbereichs und ein anschließendes Eintreten in einen benachbarten neuen Messbereich durch eine entsprechende Signalisierung sichergestellt. Mit anderen Worten wird durch eine Sequenz aus einem ersten ausgewählten Bereich, einem angrenzenden Übergangsbereich und einen angrenzenden zweiten ausgewählten Bereich sichergestellt und einem Bediener signalisiert, dass ein Bereichswechsel erfolgt ist. Der Bediener muss sich folglich nicht nur auf die Ablesung der Position der analogen Auswahlvorrichtung gegenüber einer Skala verlassen, welche durch mechanische Toleranzen fehleranfällig ist, sondern erfährt eine zusätzliche, verlässliche Information zu einem durchgeführten Bereichswechsel.

Das Signal wird durch das Signalisierungsmittel, beispielsweise optisch durch eine LED, akustisch durch einen Lautsprecher beziehungsweise Tongeber, oder auch haptisch durch einen Vibrator erzeugt werden.

In einer Weiterbildung der Erfindung ist es vorgesehen, dass die Signalisierungsvorrichtung eine elektronische Schaltung umfasst.

Dadurch kann die Vorrichtung auf eine einfache Weise realisiert werden, beispielsweise ohne einen Microcontroller, auf welchem eine entsprechende Software laufen müsste.

In einer Weiterbildung der Erfindung ist es vorgesehen, dass die Signalisierungsvorrichtung eine Messvorrichtung, vorzugsweise eines Temperaturüberwachungsrelais, umfasst.

Dadurch wird erreicht, dass mehrere Messbereiche von Temperatursensoren von der Messvorrichtung unter Verwendung von einer sehr kostengünstigen, kleinen und leicht bedienbaren analogen Auswahlvorrichtung ausgewählt werden können.

In einer Weiterbildung der Erfindung ist es vorgesehen, dass die Erstreckung der Bereichsskala kreisförmig ist. Dabei entspricht die Erstreckung der Skala einem Winkelbereich.

Dadurch wird erreicht, dass eine sehr kostengünstige, kleine und leicht bedienbare, analoge Auswahlvorrichtung verwendet werden kann, die sich insbesondere für eine Bedienung mit einem Schraubenzieher eignet.

Bei einer kreisförmigen Skala ist es günstig, wenn es mindestens so viele Übergangsbereiche wie Einstellbereiche gibt.

In einer Weiterbildung der Erfindung ist es vorgesehen, dass die analoge Auswahlvorrichtung ein Potentiometer ist.

Dadurch wird erreicht, dass die analoge Auswahlvorrichtung sehr kostengünstig durch eine, im industriellen Umfeld bereits erprobte und bewährte Technologie realisiert werden kann, welche nicht nur eine Bereichsauswahl, sondern beispielsweise auch eine analoge Einstellung des ausgewählten Bereichs oder der Messempfindlichkeit erlaubt.

In einer Weiterbildung der Erfindung ist es vorgesehen, dass zumindest ein Übergangsbereich von dem zumindest einen Übergangsbereich eine Erstreckung längs der Erstreckung der Messbereichsskala aufweist, welche höchstens halb so groß ist, wie die Erstreckung eines Einstellbereichs von den zumindest zwei Einstellbereichen längs der Erstreckung der Messbereichsskala.

Dadurch wird erreicht, dass ein Übergangsbereich auf der Skala derart günstige Abmessungen in Bezug auf einen Einstellbereich aufweist, und für die Messvorrichtung beziehungsweise deren Gehäuse insgesamt eine geringe Baugröße, das heißt ein geringer Formfaktor erreicht wird.

Die Erfindung wird nachfolgend anhand eines in den beigeschlossenen Zeichnungen dargestellten Ausführungsbeispiels näher erläutert. In den Zeichnungen zeigt:
- Fig. 1: ein Blockschaltbild mit einem Ausführungsbeispiel der Erfindung,
- Fig. 2: ein Beispiel für eine Skala zur Messbereichsauswahl und einer entsprechenden analogen Auswahlvorrichtung.

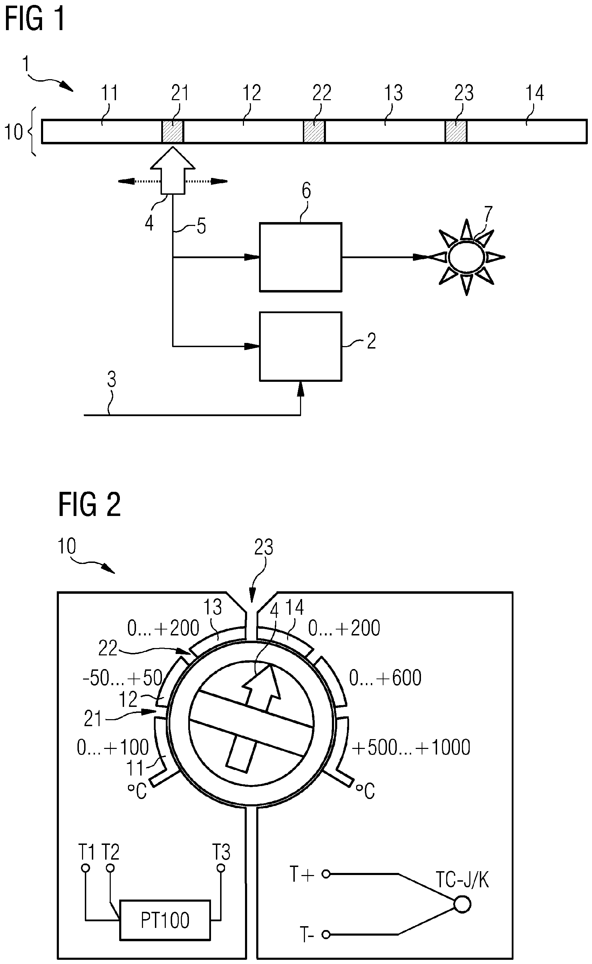

**Fig. 1** zeigt schematisch ein Blockschaltbild für ein Ausführungsbeispiel einer erfindungsgemäßen Messvorrichtung 1, welche in diesem Beispiel ein Temperaturüberwachungsrelais ist.

In diesem Beispiel ist die erfindungsgemäße Vorrichtung also eine Messvorrichtung. Alternativ könnte die Vorrichtung beispielsweise auch zur Auswahl einer Stellgröße, welche beispielsweise eine Sollgröße für ein Regelsystem vorgibt, angewandt werden.

Die Messvorrichtung weist eine Messschaltung 2 zur Erfassung eines Messsignals 3, eine analoge Auswahlvorrichtung 4 zur Wahl eines Messbereichs bei der Erfassung des Messsignals 3 und eine Messbereichsskala 10 zur Anzeige des durch die analoge Auswahlvorrichtung 4 gewählten Messbereichs auf.

Die Messbereichsskala 10 weist vier Einstellbereiche 11-14 und drei Übergangsbereiche 21-23 auf.

Jeweils ein Einstellbereich von den vier Einstellbereichen 11-14 ist alternierend mit jeweils einem Übergangsbereich von den drei Übergangsbereichen 21-23 längs einer Erstreckung der Messbereichsskala 10 angeordnet.

Mit anderen Worten sind jeweils Einstellbereiche und Übergangsbereiche benachbart aneinandergrenzend längs der Erstreckung der kreisförmigen Messbereichsskala 10 angeordnet.

Die analoge Auswahlvorrichtung 4 ist dabei so angeordnet, dass eine Auswahl eines Einstellbereichs 11-14 oder eines Übergangsbereichs 21-23 längs der Erstreckung der Messbereichsskala 10 erfolgt und die analoge Auswahlvorrichtung 4 dabei einen analogen Auswahlwert 5 festlegt.

Die analoge Auswahlvorrichtung 4 ist in diesem Beispiel ein Dreh-Potentiometer mit einem regelbaren ohmschen Widerstand. Es sind auch andere analoge Auswahlvorrichtungen, wie Schiebe-Potentiometer oder regelbare Kapazitäten möglich.

Ferner sind eine elektronische Logik 6 und ein Signalisierungsmittel 7 vorgesehen.

Die elektronische Logik 6 ist dazu eingerichtet, den analogen Auswahlwert 5 zu erfassen und zu prüfen, ob dieser einem Wert entspricht, welcher einem Übergangsbereich 21-23 zugeordnet ist. Die Logik kann diskret aufgebaut sein oder auch durch eine programmierte Ausführungseinheit in einem Mikrocontroller. Es kann eine analog-zu-digital-Konversion für den analogen Auswahlwert 5 vorgesehen sein.

Falls der Auswahlwert 5 einem Übergangsbereich 21-23 zugeordnet ist, wird beispielsweise ein optisches Signal mittels dem Signalisierungsmittel 7 in Form einer LED ausgegeben.

Die LED kann zusätzlich auch für andere Anzeigezwecke verwendet werden. Eine Unterscheidung der aktuellen Anzeige von der vorher ausgeführten Signalisierung kann beispielsweise über eine andere Darstellungsfarbe oder eine Blinkfrequenz der LED erfolgen.

**Fig. 2** zeigt ein Beispiel für eine Skala 10 für die Messvorrichtung 1, wobei die analoge Auswahlvorrichtung 4 mittels eines Schraubenziehers bedienbar ist. An der analoge Auswahlvorrichtung 4 ist ein Pfeil als Markierung angebracht, um die Position gegenüber der Skala 10 eindeutig und sichtbar zu machen.

Die Skala 10 ist so ausgeführt, dass zumindest ein Übergangsbereich von den drei Übergangsbereichen 21-23 eine Erstreckung längs der Erstreckung der Messbereichsskala 10 aufweist, hier eine Winkelbereich der kreisförmigen Skala, welche höchstens halb so groß ist, wie die Erstreckung eines Einstellbereichs von den vier Einstellbereichen 11-14 längs der Erstreckung der Messbereichsskala 10.

### Bezugszeichenliste:

- 1: Einstellvorrichtung
- 2: Messschaltung
- 3: Messsignal
- 4: analoge Auswahlvorrichtung
- 5: Auswahlwert
- 6: elektronische Schaltung
- 7: Signalisierungsmittel
- 10: Skala
- 11-14: Einstellbereich
- 21-23: Übergangsbereich

## Patentansprüche

1. Signalisierungssystem, umfassend eine Signalisierungsvorrichtung (1), eine analoge Auswahlvorrichtung (4) und eine Bereichsskala (10), wobei die Signalisierungsvorrichtung (1) dazu eingerichtet ist, ein Auswahlsignal (3) mittels der analogen Auswahlvorrichtung (4) zur Wahl eines Signalbereichs zu erzeugen, und die Bereichsskala (10) zur Anzeige des durch die analoge Auswahlvorrichtung (4) gewählten Signalbereichs eingerichtet ist, **dadurch gekennzeichnet, dass** die Bereichsskala (10) zumindest zwei Einstellbereiche (11-14) und zumindest einen Übergangsbereich (21-23) aufweist, wobei jeweils ein Einstellbereich von den zumindest zwei Einstellbereichen (11-14) alternierend mit jeweils einem Übergangsbereich von dem zumindest einen Übergangsbereich (21-23) längs einer Erstreckung der Bereichsskala (10) angeordnet sind,
und die analoge Auswahlvorrichtung (4) so angeordnet ist, dass eine Auswahl eines Einstellbereichs (11-14) oder eines Übergangsbereichs (21-23) längs der Erstreckung der Bereichsskala (10) erfolgt und die analoge Auswahlvorrichtung (4) dabei einen analogen Auswahlwert (5) festlegt, und die Signalisierungsvorrichtung (1) ferner dazu eingerichtet ist, den analogen Auswahlwert (5) mithilfe des Auswahlsignals (3) zu erfassen und zu prüfen, ob dieser einem Wert entspricht, welcher einem Übergangsbereich (21-23) zugeordnet ist, und falls zutreffend, ein Signal durch ein umfasstes Signalisierungsmittel (7) auszugeben.

2. System nach dem vorhergehenden Anspruch, wobei die Signalisierungsvorrichtung (1) eine elektronische Schaltung (2) umfasst.

3. System nach einem der vorhergehenden Ansprüche, wobei die Signalisierungsvorrichtung (1) eine Messvorrichtung, vorzugsweise eines Temperaturüberwachungsrelais, umfasst.

4. System nach einem der vorhergehenden Ansprüche, wobei die Erstreckung der Bereichsskala (10) kreisförmig ist.

5. System nach einem der vorhergehenden Ansprüche, wobei die analoge Auswahlvorrichtung (4) ein Potentiometer ist.

6. System nach einem der vorhergehenden Ansprüche, wobei zumindest ein Übergangsbereich von dem zumindest einen Übergangsbereich (21-23) eine Erstreckung längs der Erstreckung der Bereichsskala (10) aufweist, welche höchstens halb so groß ist, wie die Erstreckung eines Einstellbereichs von den zumindest zwei Einstellbereichen (11-14) längs der Erstreckung der Bereichsskala (10).

## Claims

1. Signaling system, comprising a signaling device (1), an analog selection device (4) and a range scale (10), wherein the signaling device (1) has been set up to generate a selection signal (3) by means of the analog selection device (4) for choosing a signal range, and the range scale (10) is set up for indicating the signal range chosen by the analog selection device (4),
**characterized in that** the range scale (10) exhibits at least two setting ranges (11-14) and at least one transition range (21-23), a setting range of the at least two setting ranges (11-14) being arranged in each instance alternating with, in each instance, a transition range of the at least one transition range (21-23) along an extent of the range scale (10),
and the analog selection device (4) is arranged in such a way that a selection of a setting range (11-14) or of a transition range (21-23) takes place along the extent of the range scale (10) and in the process the analog selection device (4) establishes an analog selection value (5),
and the signaling device (1) has further been set up to capture the analog selection value (5) with the aid of the selection signal (3) and to check whether this value corresponds to a value that has been assigned to a transition range (21-23), and, if appropriate, to output a signal by an included signaling means (7).

2. System according to the preceding claim, wherein the signaling device (1) includes an electronic circuit (2).

3. System according to one of the preceding claims, wherein the signaling device (1) includes a measuring device, preferentially a temperature-monitoring relay.

4. System according to one of the preceding claims, wherein the extent of the range scale (10) is circular.

5. System according to one of the preceding claims, wherein the analog selection device (4) is a potentiometer.

6. System according to one of the preceding claims, wherein at least one transition range of the at least one transition range (21-23) has an extent along the extent of the range scale (10) that is at most half as large as the extent of a setting range of the at least two setting ranges (11-14) along the extent of the range scale (10).

## Revendications

1. Système de signalisation, comprenant un dispositif de signalisation (1), un dispositif de sélection analogique (4) et une échelle de plage (10), dans lequel le dispositif de signalisation (1) est conçu pour produire un signal de sélection (3) au moyen du dispositif de sélection analogique (4) pour choisir une plage de signal, et l'échelle de plage (10) est conçue pour afficher la plage de signal choisie par le dispositif de sélection analogique (4),
**caractérisé en ce que** l'échelle de plage (10) présente au moins deux plages de réglage (11-14) et au moins une plage de transition (21-23), dans lequel respectivement une plage de réglage des aux moins deux plages de réglage (11-14) est agencée de manière alternée avec respectivement une plage de transition de l'au moins une plage de transition (21-23) le long d'une étendue de l'échelle de plage (10),
et le dispositif de sélection analogique (4) est ainsi disposé qu'une sélection d'une plage de réglage (11-14) ou d'une plage de transition (21-23) s'effectue le long de l'étendue de l'échelle de plage (10) et le dispositif de sélection analogique (4) détermine alors une valeur de sélection analogique (5),
et le dispositif de signalisation (1) est en outre conçu pour détecter la valeur de sélection analogique (5) à l'aide du signal de sélection (3) et vérifier si celle-ci correspond à une valeur qui est attribuée à une plage de transition (21-23) et si tel est le cas, émettre un signal par un moyen de signalisation (7) .

2. Système selon la revendication précédente, dans lequel le dispositif de signalisation (1) comprend un circuit électronique (2).

3. Système selon l'une des revendications précédentes, dans lequel le dispositif de signalisation (1) comprend un dispositif de mesure, de préférence un relais de surveillance de température.

4. Système selon l'une des revendications précédentes, dans lequel l'étendue de l'échelle de plage (10) est circulaire.

5. Système selon l'une des revendications précédentes, dans lequel le dispositif de sélection analogique (4) est un potentiomètre.

6. Système selon l'une des revendications précédentes, dans lequel au moins une plage de transition de l'au moins une plage de transition (21-23) présente une étendue le long de l'étendue de l'échelle de plage (10), laquelle fait au plus la moitié de l'étendue d'une plage de réglage des au moins deux plages de réglage (11-14) le long de l'étendue de l'échelle de plage (10).
